# EUROPEAN PATENT SPECIFICATION

(11) **EP 1 782 875 B1**
(45) Date of publication and mention of the grant of the patent: **10.03.2010**
(21) Application number: 06123385.4
(22) Date of filing: 02.11.2006
(51) Int. Cl.: B01D 35/157, B01D 29/60, B01D 29/33

(54) **Device for treating a flow of water, particularly for a boiler of a heating and domestic hot-water generating system**
Vorrichtung zur Behandlung von Wasser, insbesondere für einen Kessel in einem Zentralheizungs- und Brauchwasserheizungsanlage
Dispositif pour le traitement d'eau, notamment pour une chaudière dans un système de chauffage central et de production d'eau chaude sanitaire

(30) Priority: 04.11.2005 IT TO20050153 U
(43) Date of publication of application: 09.05.2007
(73) Proprietor: Elbi International SPA, 10129 Torino (IT)
(72) Inventor: Aita, Luigi, I-10040 Val Della Torre (Torino) (IT)
(74) Representative: Quinterno, Giuseppe

(56) References cited:
- US-A- 5 858 227
- US-A- 6 149 801

## Description

The present invention relates to a device for treating a water-flow such as a domestic water-flow, particularly for a boiler of a heating and domestic hot-water generating system, or for other domestic appliances.

Document US 6 149 801 describes a device for treating a water flow with a totalization meter system.

The device according to the invention comprises a holder body in which a water-treatment cartridge is fitted removably,
the holder body defining a substantially cylindrical cavity or chamber, at a first end of which a lateral inlet opening for a water-flow to be treated and an end aperture for the leaktight fitting and removal of the cartridge unit are formed, an outlet opening for the treated water-flow being defined at the other or second end of the cavity or chamber,
the cartridge unit comprising a carrying structure of moulded plastics material including:
   - a first end portion comprising a knob-like moulding which is intended to extend outside the cavity or chamber of the holder body in the vicinity of the fitting/removal aperture of the cavity or chamber, and an adjacent sealing portion suitable for being fitted in the end aperture of the cavity or chamber in a liquid-tight manner,
   - an intermediate portion which extends operatively in the cavity or chamber and which carries a filter through which the water-flow admitted to the cavity or chamber for treatment is intended to pass, and
   - a second end portion remote from the first end portion and carrying a flow detector or flow measuring device arranged hydraulically downstream of the filter.

Further characteristics and advantages of the invention will become clear from the following detailed description which is given purely by way of non-limiting example with reference to the appended drawings, in which:
Figure 1 is a partially-sectioned view of a device according to the invention,
Figure 2 is a perspective view of a cartridge unit included in the device according to the invention, shown in the assembled condition,
Figure 3 is a partially exploded, perspective view of the cartridge unit shown in the previous drawings, and
Figures 4 and 5 are partial, perspective views which show a variant.

A device according to the invention for treating a water-flow is generally indicated 1 in the drawings.

The device 1 comprises a holder body 2 in which a water-treatment cartridge unit 3 is fitted removably.

The holder body 2 is intended to be incorporated in or connected to user apparatus such as a boiler for a heating and domestic hot-water generating system.

The holder body 2 may advantageously be made of metal or of moulded plastics material.

A substantially cylindrical cavity or chamber 4 is defined inside the body 2.

A lateral inlet opening 5 for a water-flow to be treated and an end aperture 6 in which the cartridge treatment unit 3 is fitted removably and in a leaktight manner are formed at a first end of the cavity or chamber 4.

An outlet opening 7 for the treated water-flow is defined at the opposite end of the cavity or chamber 4.

The cartridge treatment unit 3 comprises a carrying structure made of plastics material, generally indicated 8. The carrying structure 8 includes an end portion 9 comprising a knob-like moulding 10 which, in the embodiment illustrated, is substantially circular and has a front diametral gripping projection 11.

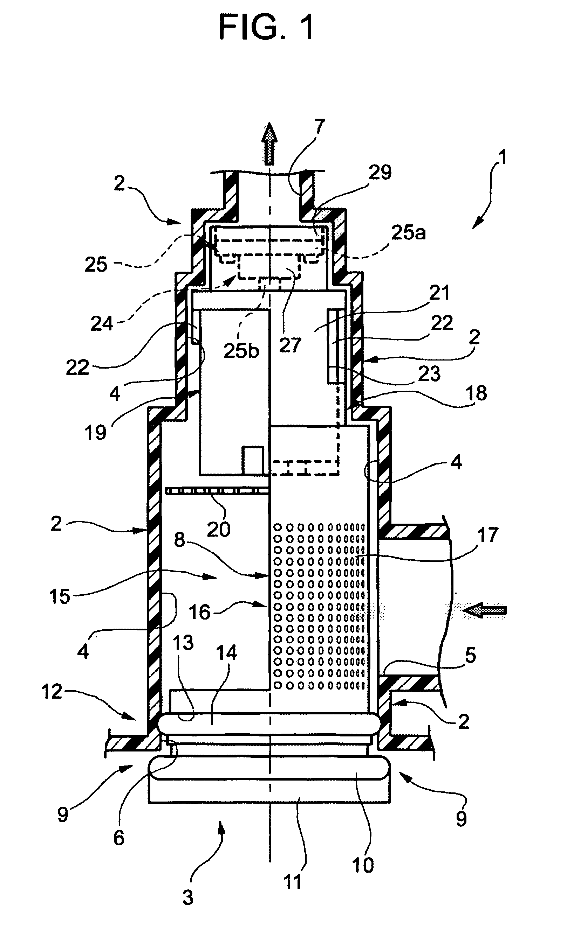

As can be seen in Figure 1, the knob-like moulding 10 of the cartridge unit 3 is intended to extend operatively outside the cavity or chamber 4 of the body in the vicinity of the aperture 6 thereof.

In the vicinity of the knob element 10, the structure 8 of the cartridge unit 3 forms a sealing portion 12 having an annular groove 13 in which a toric sealing ring 14 is positioned. The ring is intended to be fitted in the end aperture 6 of the cavity or chamber 4 of the holder body 2 in a liquid-tight manner.

The carrying structure 8 further comprises an intermediate portion 15 which extends operatively in the cavity or chamber 4 and which carries a filter 16 through which the water-flow that is admitted to the cavity or chamber 4 through the corresponding inlet opening 5 for treatment is intended to pass.

In the embodiment shown by way of example, the filter 16 comprises a perforated side wall 17 formed integrally with the carrying structure 8 and operatively facing the inlet opening 5 of the holder body 2.

According to an alternative, not shown, the filter 17 could be produced in the form of a perforated transverse disk formed integrally with the carrying structure 8 in a portion thereof that is located downstream of the inlet opening 5 of the cavity or chamber 4 of the holder body 2.

At the end remote from the end 9, the carrying structure 8 has an end portion 18 carrying a flow detector or measuring device 19 located hydraulically downstream of the filter 16-17.

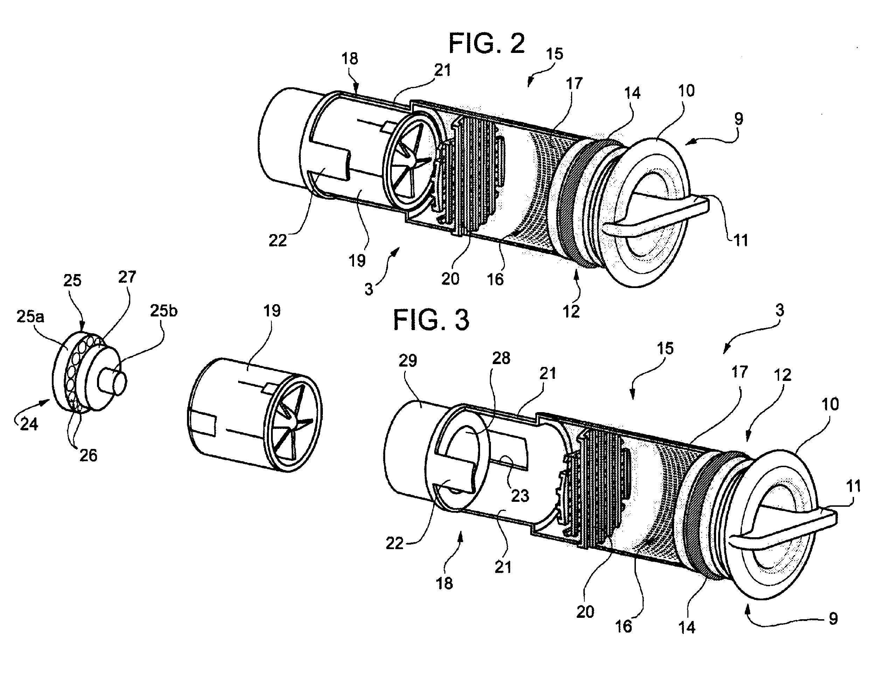

The flow detector or measuring device is of a known type and includes, for example, a turbine carrying a peripheral magnet that is intended to influence an associated stationary sensor device such as a Hall-effect magnetic field sensor or a so-called reed switch. In the embodiment shown, the device 19 is substantially cylindrical and is separate and distinct from the carrying structure 8 (see Figure 3 in particular).

A flow diffuser 20 is formed in the carrying structure 8, between the perforated wall 17 that acts as a filter and the flow detector or measuring device 19. The diffuser is advantageously formed as a perforated disk integral with the carrying structure 8 and oriented so as to be arranged operatively transversely in the cavity or chamber 4 of the holder body.

The flow detector or measuring device 19 is housed removably in a housing defined in the end portion 18 of the structure 8. In the embodiment shown, the housing is defined on one side by a curved lateral containing wall 21 and on the opposite side by a resilient, integral, longitudinal retaining appendage 22. The appendage 22 extends towards the perforated disk 20 that acts as a flow diffuser, up to a distance therefrom which is greater than or equal to the axial length of the flow detector or measuring device 19. The device 19 is consequently fitted in the corresponding housing described above by being introduced between the end of the resilient appendage 22 and the perforated disk 37 and by subsequent axial translation away from the perforated disk 20. The device 19 is removed by performing the above-described operations in reverse.

To secure the device 19 more firmly in its housing, the device may have a projection, indicated 19a in Figure 1, for snap-engagement in a corresponding opening 23 provided in the containing side wall 21.

Downstream of the flow detector or measuring device 19, the carrying structure 8 carries a flow restrictor and regulator device generally indicated 24 in Figures 1 and 3. This device is of a known type and comprises a mushroom-shaped member 25 made of plastics material with a head 25a and a shank 25b. The surface of the head 25a which faces towards the shank 25b has a series of projections 26 with which a ring or disk 27 of resilient material mounted on the shank 25b can cooperate.

In the embodiment shown, the flow restrictor/regulator device 24 is separate and distinct from the carrying structure 8 and is positioned in a corresponding housing 28 (Figure 3) provided in a cylindrical end portion 29 of that structure.

In an alternative variant, not shown, the mushroom-shaped portion 25 of the flow restrictor/regulator device could be formed integrally with the carrying structure 8.

Electrodes for taking a measurement of the conductivity of the water-flow treated may be fitted on the surface of the carrying structure 8, downstream of the filter 16, 17; these measurements enable the hardness of the water-flow to be deduced.

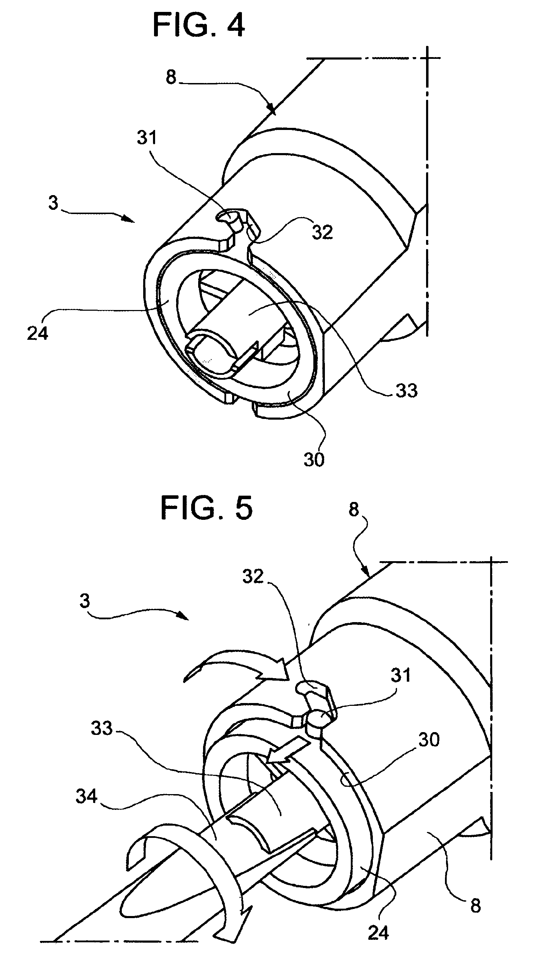

Figures 4 and 5 show partially a variant in which the flow regulator 24 is mounted in the carrying structure 8 through an opening 30 thereof remote from the above-described opening 6.

In the embodiment shown in Figures 4 and 5, the body of the flow regulator 24 is connected to the carrying structure 8 by means of a bayonet coupling with pins 31 of the regulator 24 engaging releasably in corresponding shaped notches 32 of the carrying structure 8.

Other coupling methods are, however, possible.

The body of the flow regulator 24 may have a tubular element 33 which is accessible from the exterior and in which a tool 34 such as a screwdriver can be engaged (Figure 5) for rotating the regulator during fitting or removal operations.

The fitting of the flow regulator 24 through the rear end of the body 8 of the cartridge unit has the advantage of permitting easy removal of the regulator for maintenance without the need for the flow detector or measuring device 19, which is generally quite delicate, also to be removed beforehand for this purpose.

Naturally, the principle of the invention remaining the same, the forms of embodiment and details of construction may be varied widely with respect to those described and illustrated purely by way of non-limiting example, the invention extending to all embodiments which afford equivalent utility by virtue of the innovative concepts defined in the appended claims.

## Claims

1. A device for treating a water-flow, comprising a holder body (2) in which a water-treatment cartridge unit (3) is fitted removably,
the holder body (2) defining a substantially cylindrical cavity or chamber (4), at a first end of which a lateral inlet opening (5) for a water-flow to be treated and an end aperture (6) for the leaktight fitting and removal of the cartridge unit (3) are formed, an outlet opening (7) for the treated water-flow being defined at the other or second end of the cavity or chamber (4),
the cartridge unit (3) comprising a carrying structure (8) of moulded plastics material including:
- a first end portion (9) comprising a knob-like moulding (10, 11) which is intended to extend outside the cavity or chamber (4) of the holder body (2) in the vicinity of the end aperture (6) of the cavity or chamber (4), and an adjacent sealing portion (12) suitable for being fitted in the end aperture (6) of the cavity or chamber (4) in a liquid-tight manner,
- an intermediate portion (15) which extends operatively in the cavity or chamber (4) and which carries a filter (16) through which the water-flow admitted to the cavity or chamber (4) for treatment is intended to pass, and
- a second end portion (18) remote from the first end portion (9) and carrying a flow detector or flow measuring device (19) arranged hydraulically downstream of the filter (16).

2. A device according to Claim 1 in which the carrying structure (8) carries a flow diffuser (20) between the filter (16) and the flow detector or measuring device (19).

3. A device according to Claim 1 or Claim 2 in which the carrying structure (8) carries a flow restrictor/regulator device (24) downstream of the flow detector or measuring device (19).

4. A device according to any one of the preceding claims in which the filter (16) comprises a perforated side wall (17) formed integrally with the carrying structure (8) and operatively facing the inlet opening (5) of the holder body (2).

5. A device according to Claim 2 in which the flow diffuser comprises a perforated disk (20) formed integrally with the carrying structure (8) and arranged operatively transversely in the cavity or chamber (4) of the holder body (2).

6. A device according to any one of the preceding claims in which the flow detector or measuring device (19) is substantially cylindrical in shape and is separate and distinct from the carrying structure (8) which defines a housing (21, 22) for the flow detector or measuring device (19) in the second end portion (18) between a curved side containing wall (21) and a facing resilient, integral, longitudinal retaining appendage (22), the arrangement being such that the flow detector or measuring device (19) can be fitted into and removed from the housing (21, 22).

7. A device according to Claim 6 in which the resilient retaining appendage (22) extends towards the intermediate portion (15) of the carrying structure (8) up to a distance from the flow diffuser disk (20) which is greater than or equal to the axial length of the flow detector or measuring device (19).

8. A device according to any one of the preceding claims in which the carrying structure (8) of the cartridge unit (3) carries electrodes which are intended to come into contact with the water flow and which enable measurements to be taken of the electrical conductivity or hardness of the water-flow.

9. A device according to Claim 3 and Claim 6 or Claim 7, in which the flow regulator device (24) can be fitted into and removed from the carrying structure (8) of the cartridge unit (3) through the housing (21, 22) for the flow detector or measuring device (19).

10. A device according to Claim 3 in which the flow regulator device (24) can be fitted into and removed from the carrying structure (8) of the cartridge unit (3) through an end opening (30) formed in the second end portion (18) of the carrying structure (8) so that the flow regulator (24) can be fitted and removed without the need for preliminary removal of the flow detector or measuring device (19) from the housing (21, 22).

## Patentansprüche

1. Vorrichtung zur Behandlung eines Wasser-Durchflusses, umfassend
einen Aufnahmekörper (2), in welchem eine Kartuscheneinheit (3) zur Wasserbehandlung entfernbar angebracht ist,
wobei der Aufnahmekörper (2) einen/eine im Wesentlichen zylinderförmigen Hohlraum oder zylinderförmig Kammer (4) definiert, wobei an einem ersten Ende davon eine seitliche Einlassöffnung (5) für einen zu behandelnden Wasser-Durchfluss und eine Endöffnung (6) für ein dichtes Anbringen und Entfernen der Kartuscheneinheit (3) gebildet werden,
wobei eine Auslaßöffnung (7) für den behandelten Wasser-Durchfiuss an dem anderen oder zweiten Ende des Hohlraums oder der Kammer (4) gebildet wird,
wobei die Kartuscheneinheit (3) eine Tragstruktur (8) aus geformtem Kunststoffmaterial umfasst, umfassend:
- einen ersten Endabschnitt (9), umfassend eine Griff-artige Ausformung (10, 11), welche vorgesehen ist, sich außerhalb des Hohlraums oder der Kammer (4) des Aufnahmekörpers (2), in der Nachbarschaft der Endöffnung (6) des Hohlraums oder der Kammer (4) zu erstrecken, und einen benachbarten Dichtungsabschnitt (12), der geeignet ist, in einer flüssigkeitsabdichtenden Weise in der Endöffnung (6) des Hohlraums oder der Kammer (4) angebracht zu werden,
- einen Zwischenabschnitt (15), der sich in den Hohlraum oder in die Kammer (4) betriebsmäßig erstreckt und welcher einen Filter (16) trägt, durch welchen der Wasser-Durchfluss, der in den Hohlraum oder in die Kammer (4) zur Behandlung eingelassen wird, durchfließen soll, und
- einen zweiten Endabschnitt (18), der von dem ersten Endabschnitt (9) entfernt ist und welcher einen Durchflussdetektor oder eine Durchflussmessvorrichtung (19) trägt, der/die hydraulisch stromabwärts des Filters (16) angeordnet ist.

2. Vorrichtung nach Anspruch 1,
in welcher die Tragstruktur (8) einen Durchflussverteiler (20) zwischen dem Filter (16) und dem Durchflussdetektor oder der Durchflussmessvorrichtung (19) trägt.

3. Vorrichtung nach Anspruch 1 oder Anspruch 2,
in welcher die Tragstruktur (8) eine Durchflussbegrenzungs-/Durchflussregelungsvorrichtung (24) stromabwärts des Durchflussdetektors oder der Messvorrichtung (19) trägt.

4. Vorrichtung nach einem der vorhergehenden Ansprüche,
in welcher der Filter (16) eine durchlochte Seitenwand (17) umfasst, die integral mit der Tragstruktur (8) gebildet ist und betriebsmäßig der Einlassöffnung (5) des Aufnahmekörpers (2) zugewandt ist.

5. Vorrichtung nach Anspruch 2,
in welcher der Durchflussverteiler eine durchlochte Scheibe (20) umfasst, die integral mit der Tragstruktur (8) gebildet ist und betriebsmäf3ig in dem Hohlraum oder der Kammer (4) des Aufnahmekörpers (2) schräg angeordnet ist.

6. Vorrichtung nach einem der vorhergehenden Ansprüche,
in welcher der Durchflussdetektor oder die Durchflussmessvorrichtung (19) im Wesentlichen zylinderförmig ist und von der Tragstruktur (8) getrennt und verschieden ist, die ein Gehäuse (21, 22) für den Durchflussdetektor oder die Durchflussmessvorrichtung (19) in der zweiten Endabschnitt (18), zwischen einer Wand (21), welche eine gekrümmte Seite umfasst, und einem zugewandten elastischen, integralen, länglichen Haltefortsatz (22) definiert,
wobei die Anordnung derart ausgebildet ist, dass der Durchflussdetektor oder die Durchflussmessvorrichtung (19) in dem Gehäuse (21, 22) angebracht werden kann und daraus entfernt werden kann.

7. Vorrichtung nach Anspruch 6,
in welcher der elastische Haltefortsatz (22) sich gegen den Zwischenabschnitt (15) der Tragstruktur (8) bis zu einer Entfernung von der Durchflussverteilerscheibe (20) erstreckt, die größer als die axiale Länge oder gleich der axialen Länge des Durchflussdetektors oder der Durchflussmessvorrichtung (19) ist.

8. Vorrichtung nach einem der vorhergehenden Ansprüche,
in welcher die Tragstruktur (8) der Kartuscheneinheit (3) Elektroden trägt, die dafür vorgesehen sind, in Kontakt mit dem Wasser-Durchfluss zu kommen und welche es ermöglichen, Messungen der elektrischen Leitfähigkeit oder der Härte des Wasser-Durchflusses vorzunehmen.

9. Vorrichtung nach einem der Ansprüche 3 und 6 oder 7,
in welcher die Durchflussreglervorrichtung (24) durch das Gehäuse (21, 22) für den Durchflussdetektor oder die Durchflussmessvorrichtung (19) in der Tragestruktur (8) der Kartuscheneinheit (3) angebracht werden kann und aus dieser entfernt werden kann.

10. Vorrichtung nach Anspruch 3,
in welcher die Durchflussreglervorrichtung (24) durch eine Endöffnung (30), die in den zweiten Endabschnitt (18) der Tragstruktur (8) gebildet ist, in der Tragstruktur (8) der Kartuscheneinheit (3) angebracht werden kann und aus dieser entfernt werden kann, so dass der Durchflussregler (24) angebracht und entfernt werden kann, ohne dass Notwendigkeit für ein vorläufiges Entfernen des Durchflussdetektors oder der Durchflussmessvorrichtung (19) von dem Gehäuse (21, 22) besteht.

## Revendications

1. Dispositif pour traiter un écoulement d'eau, comprenant un corps de support (2) dans lequel une unité de cartouche de traitement d'eau (3) est montée de manière amovible,
le corps de support (2) définissant une cavité ou chambre (4) sensiblement cylindrique, à une première extrémité de laquelle une ouverture d'entrée latérale (5) pour un écoulement d'eau à traiter et une ouverture d'extrémité (6) pour le montage étanche et le retrait de l'unité de cartouche (3) sont formées, une ouverture de sortie (7) pour l'écoulement d'eau traité étant définie à l'autre ou deuxième extrémité de la cavité ou chambre (4),
l'unité de cartouche (3) comprenant une structure de support (8) en matière plastique moulée comprenant :
- une première partie d'extrémité (9) comprenant un moulage semblable à un bouton (10, 11) qui est destiné à s'étendre à l'extérieur de la cavité ou chambre (4) du corps de support (2) dans le voisinage de l'ouverture d'extrémité (6) de la cavité ou chambre (4), et une partie d'étanchéité (12) adjacente adaptée pour être insérée dans l'ouverture d'extrémité (6) de la cavité ou chambre (4) de manière étanche aux liquides,
- une partie intermédiaire (15) qui s'étend fonctionnellement dans la cavité ou chambre (4) et qui supporte un filtre (16) à travers lequel l'écoulement d'eau admis dans la cavité ou chambre (4) pour traitement est destiné à passer, et
- une deuxième partie d'extrémité (18) à distance de la première partie d'extrémité (9) et supportant un détecteur d'écoulement ou dispositif de mesure d'écoulement (19) agencé hydrauliquement en aval du filtre (16).

2. Dispositif selon la revendication 1, dans lequel la structure de support (8) supporte un diffuseur d'écoulement (20) entre le filtre (16) et le détecteur ou dispositif de mesure d'écoulement (19).

3. Dispositif selon la revendication 1 ou la revendication 2, dans lequel la structure de support (8) supporte un dispositif de limitation/régulation d'écoulement (24) en aval du détecteur ou dispositif de mesure d'écoulement (19).

4. Dispositif selon l'une quelconque des revendications précédentes, dans lequel le filtre (16) comprend une paroi latérale (17) perforée formée d'un seul tenant avec la structure de support (8) et faisant face fonctionnellement à l'ouverture d'entrée (5) du corps de support (2).

5. Dispositif selon la revendication 2, dans lequel le diffuseur d'écoulement comprend un disque (20) perforé formé d'un seul tenant avec la structure de support (8) et agencé fonctionnellement transversalement dans la cavité ou chambre (4) du corps de support (2).

6. Dispositif selon l'une quelconque des revendications précédentes, dans lequel le détecteur ou dispositif de mesure d'écoulement (19) a une forme sensiblement cylindrique et est séparé et distinct de la structure de support (8) qui définit un logement (21, 22) pour le détecteur ou dispositif de mesure d'écoulement (19) dans la deuxième partie d'extrémité (18) entre une paroi latérale de rétention (21) incurvée et un appendice de retenue (22) élastique, intégral, longitudinal, opposé, l'agencement étant tel que le détecteur ou dispositif de mesure d'écoulement (19) peut être inséré dans le logement (21, 22) et retiré de celui-ci.

7. Dispositif selon la revendication 6, dans lequel l'appendice de retenue (22) élastique s'étend vers la partie intermédiaire (15) de la structure de support (8) jusqu'à une distance du disque de diffusion d'écoulement (20) qui est supérieure ou égale à la longueur axiale du détecteur ou dispositif de mesure d'écoulement (19).

8. Dispositif selon l'une quelconque des revendications précédentes, dans lequel la structure de support (8) de l'unité de cartouche (3) supporte des électrodes qui sont destinées à venir en contact avec l'écoulement d'eau et qui permettent de prendre des mesures de la conductivité électrique ou de la dureté de l'écoulement d'eau.

9. Dispositif selon la revendication 3 et la revendication 6 ou la revendication 7, dans lequel le dispositif de régulation d'écoulement (24) peut être inséré dans la structure de support (8) de l'unité de cartouche (3) et retiré de celle-ci à travers le logement (21, 22) pour le détecteur ou dispositif de mesure d'écoulement (19).

10. Dispositif selon la revendication 3, dans lequel le dispositif de régulation d'écoulement (24) peut être inséré dans la structure de support (8) de l'unité de cartouche (3) ou retiré de celle-ci à travers une ouverture d'extrémité (30) formée dans la deuxième partie d'extrémité (18) de la structure de support (8) de sorte que le régulateur d'écoulement (24) puisse être inséré et retiré sans devoir retirer préalablement le détecteur ou dispositif de mesure d'écoulement (19) du logement (21, 22).
